(19) Europäisches Patentamt / European Patent Office / Office européen des brevets

(11) **EP 3 588 164 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(51) Internationale Patentklassifikation (IPC):
**G02B 21/06** (2006.01)   **G02B 26/06** (2006.01)
**G02F 1/13** (2006.01)   **G09G 3/00** (2006.01)

(21) Anmeldenummer: **19180398.0**

(22) Anmeldetag: **14.06.2019**

(52) Gemeinsame Patentklassifikation (CPC):
**G02B 21/06; G02B 26/06;** G02F 2203/12

(54) **VERFAHREN ZUM KALIBRIEREN EINER PHASENMASKE UND MIKROSKOP**

METHOD FOR CALIBRATING A PHASE MASK AND MICROSCOPE

PROCÉDÉ D'ÉTALONNAGE D'UN MASQUE DE PHASE ET MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2018 DE 102018115001**

(43) Veröffentlichungstag der Anmeldung:
**01.01.2020 Patentblatt 2020/01**

(73) Patentinhaber: **Carl Zeiss Microscopy GmbH**
**07745 Jena (DE)**

(72) Erfinder:
- **EICHELKRAUT, Toni**
  **07745 Jena (DE)**
- **SIEBENMORGEN, Jörg**
  **07745 Jena (DE)**

(74) Vertreter: **Schiffer, Axel Martin**
**Rundfunkplatz 2**
**80335 München (DE)**

(56) Entgegenhaltungen:
**US-A1- 2015 323 787**

- ZHENG ZHANG: "Simple method for measuring phase modulation in liquid crystal televisions", OPTICAL ENGINEERING., vol. 33, no. 9, 1 September 1994 (1994-09-01), BELLINGHAM, pages 3018, XP055641647, ISSN: 0091-3286, DOI: 10.1117/12.177518
- CHEN XIAO ET AL: "A calibration algorithm for the voltage-phase characteristic of a liquid crystal optical phased array", VISUAL COMMUNICATIONS AND IMAGE PROCESSING; 20-1-2004 - 20-1-2004; SAN JOSE,, vol. 9795, 5 November 2015 (2015-11-05), pages 979503 - 979503, XP060061602, ISBN: 978-1-62841-730-2, DOI: 10.1117/12.2207866
- RUNYON M T ET AL: "Implementation of nearly arbitrary spatially-varying polarization transformations: a non-diffractive and non-interferometric approach using spatial light modulators", ARXIV.ORG, CORNELL UNIVERSITY LIBRARY, 201 OLIN LIBRARY CORNELL UNIVERSITY ITHACA, NY 14853, 16 February 2018 (2018-02-16), XP081215819, DOI: 10.1364/AO.57.005769

**Beschreibung**

Die Erfindung betrifft in einem ersten Gesichtspunkt ein Verfahren zum Kalibrieren einer Phasenmaske, insbesondere eines SLM, in einem Strahlengang eines Lichtblattmikroskops. In einem zweiten Gesichtspunkt bezieht sich die Erfindung auf ein Lichtblattmikroskop, welches insbesondere zur Durchführung des erfindungsgemäßen Verfahrens geeignet ist.

Ein gattungsgemäßes Mikroskop zum Untersuchen einer Probe weist folgende Komponenten auf: Mindestens eine Lichtquelle zum Aussenden von Beleuchtungslicht, mindestens ein Mikroskopobjektiv zum Leiten des Beleuchtungslichts auf die Probe und optische Mittel zum Leiten von Detektionslicht von der Probe auf eine Kamera, eine im Strahlengang angeordnete Phasenmaske, die Kamera zum Messen von Licht in einem Detektionsstrahlengang und eine Steuer- und Auswerteeinheit zum Ansteuern der Phasenmaske und der Kamera und zum Auswerten von von der Kamera gemessenem Licht.

In der Mikroskopie wird in unterschiedlichen Anwendungsgebieten eine strukturierte Beleuchtung benötigt. Beispielsweise wird für die Lichtblattmikroskopie eine Beleuchtung benötigt, die einem dünnen Blatt ähnelt. Das bedeutet, dass ein sogenanntes Lichtblatt erzeugt werden soll, dass in einer ersten transversalen Richtung möglichst dünn, in einer zweiten transversalen Richtung breit und in Ausbreitungsrichtung des Lichts möglichst lang ist. Um das zu erreichen, können beispielsweise Besselstrahlen kohärent überlagert werden. Bekannt ist außerdem, Interferenzeffekte zwischen einzelnen Besselstrahlen gezielt zu nutzen, um ein ausgedehntes und außerdem strukturiertes Lichtblatt zu erzeugen.

Bekannt sind außerdem sogenannte Sinc$^3$-Strahlen, mit denen ein quaderförmiges Lichtblatt in der Probe mit nur geringen Nebenmaxima möglich ist.

Ein weiterer Einsatzbereich für Phasenmasken, insbesondere räumliche Lichtmodulatoren (Spatial Light Modulator SLM), ist die Laser-Scanning-Mikroskopie, wo ein dreidimensionales Volumen mit einem Beleuchtungsfokus abgerastert wird. In der Fluoreszenzmikroskopie werden bei bestimmten Techniken Bereiche einer Probe gezielt optisch gebleicht. Hierzu ist ebenfalls eine geeignete räumliche Strukturierung des zum Bleichen verwendeten Lichts notwendig. Eine prominente Anwendung von strukturierter Beleuchtung ist die sogenannte Superresolution-Microscopy, bei der die Punktverteilungsfunktion (Point-Spread-Function) gezielt geformt wird. Beispielsweise hat die für die Beleuchtung verwendete Punktverteilungsfunktion im sogenannten STED-Verfahren die Form eines Doughnuts.

Die vorgenannten Beispiele für strukturierte Beleuchtungen können mit Phasenmasken, beispielsweise räumlichen Lichtmodulatoren (SLM), verwirklicht werden. Es gibt im Wesentlichen zwei verschiedene Arten von SLMs, die sich durch die verwendeten Flüssigkristalle unterscheiden. Nematische SLMs ermöglichen einen maximalen kontinuierlich einstellbaren Phasenhub von 0 bis zu $6\pi$, sind allerdings vergleichsweise langsam. In der Regel haben sie Bildwiederholraten von etwa 60 Hz. Spezielle nematische SLMs können Wiederholraten bis zu 500 Hz erreichen. Mit nematischen SLMs können hohe Beugungseffizienzen von über 90 Prozent erreicht werden.

Ferroelektrische SLMs können nur zwischen dem Zustand mit Phasenhub 0 und Phasenhub $\pi$ hin- und herschalten. Vorteilhaft bei ferroelektrischen SLMs ist deren hohe Geschwindigkeit. Es können Bildwiederholraten von bis zu 4 kHz erreicht werden. Die Beugungseffizienz ist mit etwa 10 Prozent allerdings vergleichsweise gering.

Beiden Arten von SLMs ist gemeinsam, dass der erzielbare Phasenhub von der Wellenlänge des eingestrahlten Laserlichts abhängt.

Ein nematischer SLM sollte so kalibriert sein, dass er einen kontinuierlichen Phasenhub von 0 bis $2\pi$ aufweist. Dieser Phasenhub kann allerdings nur für eine Designwellenlänge eingestellt werden. Sobald der SLM mit Licht anderer Wellenlänge bestrahlt wird, weicht der diesem Licht aufprägbare Phasenhub von $2\pi$ ab. Bei kleinerer Wellenlänge wird der Phasenhub größer, bei größerer Wellenlänge verringert sich der Phasenhub.

Ähnlich verhält es sich bei einem ferroelektrischen SLM. Auch hier wird der Phasenhub von $\pi$ nur für eine Designwellenlänge erzielt. Bei davon abweichenden Wellenlängen werden von $\pi$ abweichende Phasenhübe generiert.

Diese Eigenschaften der zur Verfügung stehenden SLMs wirken sich direkt auf die Erzeugung der oben angegebenen Beispiele für strukturierte Beleuchtung aus. Diese Strahlen können nur dann optimal erzeugt werden, wenn der Phasenhub entweder kontinuierlich von 0 bis $2\pi$ einstellbar ist, beispielsweise für Bessel- und Mathieu-Strahlen, oder exakt $\pi$ beträgt, beispielsweise bei kohärent überlagerten Bessel- oder kohärent überlagerten Sinc$^3$- Strahlen.

Die Ansteuerung eines SLMs erfolgt üblicherweise über eine Steuer- und Auswerteeinheit, typischerweise einen PC, der dem SLM ein Graustufenbild zur Verfügung stellt. Die Graustufen der einzelnen Bildpunkte werden SLM-intern in Spannungen umgewandelt und entsprechen somit den Phasenhüben der einzelnen SLM-Pixel. Beispielsweise kann bei einer Bit-Tiefe von 8 Bit der Grauwert 0 im Bild einem Phasenhub von 0 und der Grauwert 255 einem Phasenhub von $2\pi$ entsprechen. Wie oben beschrieben, kann der SLM nur dann optimal genutzt werden, wenn der wellenlängenabhängige Phasenhub entsprechend kalibriert ist. Das bedeutet, dass dem SLM beispielsweise eine Tabelle zur Verfügung gestellt wird, die den Grauwerten die jeweiligen Spannungen zuweist, die zum gewünschten Phasenhub führen.

Die Firma Holoeye hat einen Messaufbau zum Kalibrieren eines SLMs beschrieben, bei dem ein Laserstrahl in zwei Teile aufgespalten wird und die beiden Teilstrahlenbündel jeweils auf einen Teilbereich des zu kalibrierenden SLMs gelenkt werden. Auf einer Kamera werden beide Strahlen wieder überlagert und das sich bildende streifenförmige Interferenzmuster wird aufgenommen. Auf die beiden Teilbereiche des SLMs werden unterschiedliche Grauwerte gelegt, um die relative Phase der beiden Strahlen zu verändern und somit das Interferenzmuster auf der Kamera zu verschieben. Die Verschiebung der Interferenzmaxima auf der Kamera ist direkt proportional zum relativen Phasenhub. Bei dieser Kalibriermethode wird der SLM für eine gewünschte Wellenlänge kalibriert, bevor der SLM in einem optischen Gerät, beispielsweise in einem Mikroskop, fest verbaut wird. Eine nachfolgende Kalibrierung ist mit diesem Verfahren nicht mehr möglich, ohne den SLM aus dem jeweiligen Gerät auszubauen.

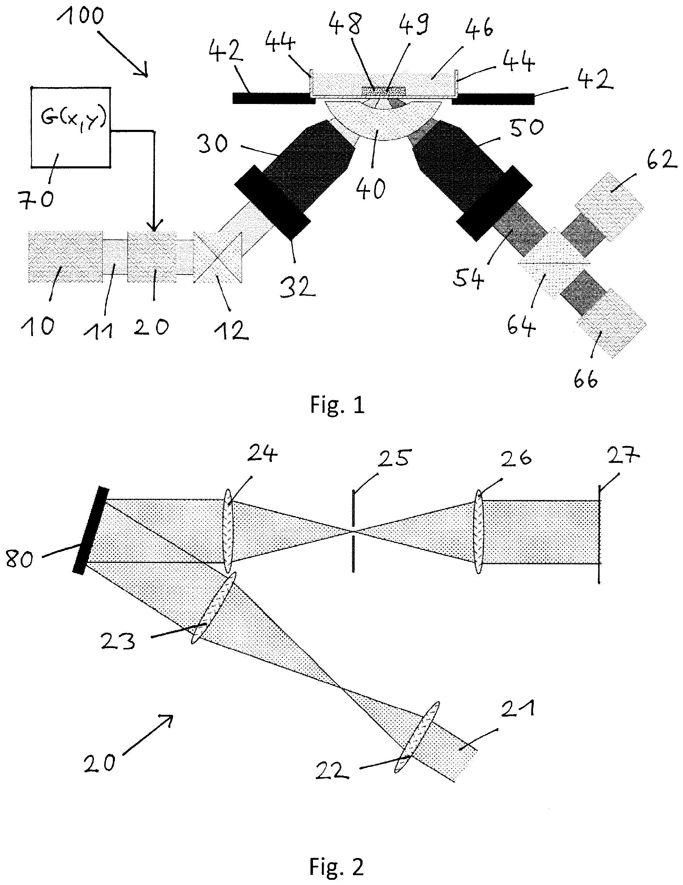

In Zheng Zhang et al.: "Simple method for measuring phase modulation in liquid crystal televisions"; OPTICAL ENGINEERING / September 1994 / Vol. 33 No. 9 / p. 3018) ist ein Verfahren zum Messen der Phasenmodulation bei Flüssigkristalldisplays (LCTV) of-fenbart. Im Zusammenhang mit Figur 1 ist dort ein Aufbau beschrieben, bei dem ein Ronchi-Gitter mit variabel einstellbare Graustufen zum Einsatz kommt.

US 2015/0323787 A1 betrifft ein Mikroskop mit einer Phasenmaske. Zum Optimieren der Ansteuerung der Phasenmaske wird dabei auf die vorgenannte Schrift von Zheng Zhang et al. Bezug genommen

Als eine Aufgabe der vorliegenden Erfindung kann erachtet werden, ein Verfahren zum Kalibrieren einer Phasenmaske in einem optischen Gerät anzugeben, welches besonders unaufwändig durchzuführen ist. Außerdem soll ein Mikroskop geschaffen werden, bei dem eine darin vorhandene Phasenmaske ohne großen Aufwand kalibriert werden kann.

Diese Aufgabe wird durch das Verfahren mit den Merkmalen des Anspruchs 1 und durch das Mikroskop mit den Merkmalen des Anspruchs 12 gelöst.

Vorteilhafte Varianten des erfindungsgemäßen Verfahrens und bevorzugte Ausgestaltungen des erfindungsgemäßen Mikroskops werden im Folgenden, insbesondere im Zusammenhang mit den abhängigen Ansprüchen und den Figuren, beschrieben.

Bei dem erfindungsgemäßen Verfahren zum Kalibrieren einer Phasenmaske in einem Strahlengang eines optischen Geräts werden folgende Verfahrensschritte durchgeführt: Die Phasenmaske wird nacheinander mit unterschiedlichen Mustern von Grauwerten angesteuert, wobei ein erster Grauwert einer ersten Teilmenge von Segmenten konstant bleibt und wobei ein zweiter Grauwert einer zweiten Teilmenge von Segmenten von einem Muster zum nächsten Muster variiert wird, die Phasenmaske wird mit Licht des optischen Geräts beaufschlagt, mindestens ein Teil der gesamten Intensität des Lichts im Strahlengang wird strahlabwärts von der Phasenmaske für die unterschiedlichen Muster gemessen und es wird eine Kennlinie der gemessenen Intensität in Abhängigkeit von dem zweiten Grauwert gewonnen, aus der Kennlinie wird ein Zusammenhang zwischen dem zweiten Grauwert und einem Phasenversatz, der durch die Phasenmaske aufgeprägt wird, gewonnen und eine Ansteuerung der Phasenmaske wird auf Grundlage des gewonnenen Zusammenhangs zwischen Grauwert und Phasenversatz kalibriert.

Das Mikroskop der oben angegebenen Art ist erfindungsgemäß dadurch weitergebildet, dass die Steuer- und Auswerteeinheit dazu eingerichtet ist, die Phasenmaske nacheinander mit unterschiedlichen Mustern von Grauwerten anzusteuern, wobei ein erster Grauwert einer ersten Teilmenge von Segmenten konstant bleibt und wobei ein zweiter Grauwert einer zweiten Teilmenge von Segmenten von einem Muster zum nächsten Muster variiert wird, die Kamera zum Messen mindestens eines Teils der gesamten Intensität des Lichts im Strahlengang strahlabwärts von der Phasenmaske für die unterschiedlichen Muster anzusteuern, eine Kennlinie der gemessenen Intensität in Abhängigkeit von dem zweiten Grauwert zu bilden, aus der Kennlinie einen Zusammenhang zwischen dem zweiten Grauwert und einem Phasenversatz, der durch die Phasenmaske aufgeprägt wird, zu gewinnen und eine Ansteuerung der Phasenmaske auf Grundlage des gewonnenen Zusammenhangs zwischen Grauwert und Phasenversatz zu kalibrieren.

Unter einer Phasenmaske wird im Rahmen der vorliegenden Beschreibung eine optische Vorrichtung mit einer Mehrzahl von ansteuerbaren Segmenten verstanden, die jeweils hindurchtretendem oder reflektiertem Licht einen definierten und je nach Ansteuerung des entsprechenden Segments variablen Phasenversatz aufprägen. Prinzipiell können Phasenmasken zum Einsatz kommen, bei denen die Segmente nur in einer Raumrichtung unterteilt sind. Ein Beispiel hierfür wären Phasenmaske mit streifenförmigen Segmenten.

Besonders bevorzugt kommen Phasenmasken zum Einsatz, die eine zweidimensionale Strukturierung aufweisen. Solche Phasenmasken können als 2D-Phasenmaske bezeichnet werden und können insbesondere eine Pixelstruktur mit Pixelreihen und Pixelzeilen aufweisen. Die einzelnen einstellbaren oder ansteuerbaren Segmente der Phasenmaske sind also einzelne Pixel. Die Möglichkeiten der Strahlmanipulierung sind bei solchen zweidimensionalen Phasenmasken besonders vielgestaltig.

Grundsätzlich können ferroelektrische SLMs als Phasenmasken verwendet werden. In der Regel kommen wegen variablen Einstellmöglichkeiten als Phasenmasken nematische Spatial Light Modulatoren (SLM) zum Einsatz.

Als Kalibrieren einer Phasenmaske wird derjenige Vorgang bezeichnet, bei dem eine definierte Zuordnung einer Ansteuerung, beispielsweise eines digitalen Ansteuerwerts, zu einem gewünschten Phasenhub des jeweils angesteuerten Segments der Phasenmaske bereitgestellt wird.

Als optische Geräte kommen im Prinzip alle Geräte im Betracht, bei denen Phasenmasken zur kontrollierten und definierten Mikrobeeinflussung von Licht verwendet werden.

Die wesentlichen Einsatzgebiete wird das erfindungsgemäße Verfahren bei Mikroskopen finden, wo in vielgestaltiger Weise, insbesondere das Beleuchtungslicht aber auch Detektionslicht, strukturiert werden soll.

Beispielsweise kann das optische Gerät ist erfindungsgemäß ein Lichtblattmikroskop. Vorteilhafte Anwendungsmöglichkeiten des Verfahrens, die nicht zur Erfindung gehören, bestehen aber auch für Photomanipulatoren zur Mikromanipulation von Farbstoffen als optische Geräte.

Mit dem Begriff des Grauwerts wird im Rahmen der vorliegenden Beschreibung der Ansteuerwert bezeichnet, mit dem ein bestimmtes Segment der Phasenmaske beaufschlagt wird. Insbesondere kann es sich dabei um einen digitalen Ansteuerwert handeln, beispielsweise mit einer Bitbreite von 8 Bit. Dieser Wert kann demgemäß Werte von 0 bis 255 annehmen. Ansteuern bedeutet, dass ein bestimmter Ansteuerwert an ein bestimmtes Segment oder ein bestimmtes Pixel angelegt wird. Dieses Pixel wird dadurch in einen Zustand versetzt, in dem es hindurchtretendem oder reflektiertem Licht einen bestimmten Phasenhub aufprägt. Wie groß dieser Phasenhub für einen bestimmten Ansteuerwert ist, ist zunächst nicht klar. Dieses zu ermitteln, ist Ziel des erfindungsgemäßen Verfahrens.

Als Muster von Grauwerten werden bestimmte Kombinationen von Ansteuerwerten für die verschiedenen Segmente, insbesondere Pixel, der verwendeten Phasenmaske verstanden.

Als Teilmenge von Segmenten wird eine bestimmte Untermenge von Segmenten bezeichnet, die prinzipiell beliebig auf der Phasenmaske verteilt sein können und insbesondere nicht benachbart sein müssen.

Mit dem Begriff Licht des optischen Geräts ist für die Beschreibung der vorliegenden Erfindung Licht gemeint, welches von der Phasenmaske in einem Arbeitsbetrieb des optischen Geräts manipuliert werden soll. Beispielsweise ist damit für den Fall der Mikroskope das Beleuchtungslicht, mit welchem eine Probe beaufschlagt wird, gemeint.

Erfindungsgemäß soll mindestens ein Teil der gesamten Intensität des Lichts im Strahlengang strahlabwärts von der Phasenmaske für die unterschiedlichen Muster gemessen werden. Damit ist insbesondere gemeint, dass ein Teil des Strahlquerschnitts intensitätsmäßig ausgewertet wird. Insbesondere kann der Teil der gesamten Intensität das Licht mindestens einer Beugungsordnung, beispielsweise der nullten oder der ersten Beugungsordnung, sein.

Mit dem Begriff der Kennlinie der gemessenen Intensität in Abhängigkeit von dem zweiten Grauwert ist die Gesamtheit der Wertepaare (eingestellter zweiter Grauwert, für diesen Grauwert gemessene Intensität) gemeint.

Wesentlich für die Kalibrierung ist, den tatsächlichen Zusammenhang zwischen einem bestimmten eingestellten Grauwert und einem durch diesen Grauwert tatsächlich bewirkten Phasenversatz zu ermitteln. Die Kenntnis dieses Zusammenhangs ermöglicht schließlich, die Ansteuerung der Phasenmaske auf Grundlage eben dieses gewonnenen Zusammenhangs zwischen Grauwert und Phasenversatz zu kalibrieren.

Als wesentlicher Vorteil der vorliegenden Erfindung kann erachtet werden, dass die Phasenmasken prinzipiell auch in einem Zustand kalibriert werden können, wo sie in das jeweilige optische Gerät, insbesondere also in einem Mikroskop, eingebaut sind. Eine solche nachträgliche Kalibrierung kann beispielsweise notwendig werden, wenn ein Mikroskop bei unterschiedlichen Temperaturen betrieben wird oder wenn eine Ansteuereinheit des SLMs, beispielsweise ein FPGA (Field Programmable Gate Array) aufgrund eines Defekts ausgetauscht werden muss. Auch können Alterungserscheinungen eines SLM einen ursprünglichen Zusammenhang zwischen Grauwert und Phasenhub verändern, wodurch ebenfalls eine Neukalibrierung notwendig werden kann. Diese nachträglichen Kalibrierungen können mithilfe des erfindungsgemäßen Verfahrens und können bei dem erfindungsgemäßen Mikroskop durchgeführt werden, ohne dass die jeweilige Phasenmaske ausgebaut werden muss. Ein weiterer bedeutsamer Vorteil der vorliegenden Erfindung ist in diesem Zusammenhang auch, dass aufwändige Justierungen im Strahlengang des optischen Geräts nicht notwendig sind, weil die neu zu kalibrierende Phasenmaske nicht ausgebaut werden muss.

Für die zum Einsatz kommenden Muster, mit denen die Phasenmasken beaufschlagt werden, besteht im Grundsatz große Freiheit. Wesentlich ist, dass die Ansteuerung für eine erste Gruppe oder Teilmenge von Segmenten nicht verändert wird und dass die Ansteuerung für eine zweite Teilmenge von Segmenten von einem Muster zum nächsten Muster verändert wird.

Grundsätzlich können die Muster auch nichtperiodisch sein. Besonders bevorzugt sind die Muster aber mindestens in einer Raumrichtung in der Ebene der Phasenmaske periodisch.

Beispielsweise können die eingestellten Muster von Grauwerten Muster zum Erzeugen eines Dammanngitters sein.

Bei besonders bevorzugten Varianten des erfindungsgemäßen Verfahrens wird der zweite Grauwert über einen gesamten Dynamikbereich der Phasenmaske variiert. Vorarbeiten, die zur vorliegenden Erfindung geführt haben, haben gezeigt, dass die Kalibrierung dann aufgrund von vergleichsweise einfachen mathematischen Zusammenhängen durchgeführt werden kann.

Grundsätzlich können für die Zwecke der Kalibrierung separate Strahlumlenkmittel vorhanden sein, mit denen das Beleuchtungslicht, dass für die Messungen zur Kalibrierung verwendet wird, zu der Kamera geleitet wird.

Bei einer Variante, die nicht zur Erfindung gehört, kann, insbesondere bei einem Laser-Scanning-Mikroskop oder bei einem Weitfeldmikroskop, für die Messungen zur Kalibrierung eine spezielle fluoreszierende Probe verwendet werden.

Zur Verwirklichung des erfindungsgemäßen Verfahrens ist aber im Grundsatz ausreichend, wenn Licht, welches von der Phasenmaske beeinflusst wurde, in irgendeiner Weise auf die Kamera oder einen Detektor gelangt. Erfindungsgemäß wird für die Messungen zur Kalibrierung an einem Objektträger oder einem Deckglas reflektiertes Licht verwendet. Die Maßnahmen, welche für die Durchführung der Kalibrierungsmessungen notwendig sind, sind dann denkbar unaufwändig.

Erfindungsgemäß werden für die Messungen zur Kalibrierung eventuell vorhandene Filter zum Blockieren von Anregungslicht im Detektionsstrahlengang aus dem Strahlengang entfernt. Die Erfindung hat erkannt, dass der Zusammenhang zwischen Grauwert und Phasenversatz vergleichsweise einfach ermittelt werden kann, bei einer besonders bevorzugten Variante des erfindungsgemäßen Verfahrens, bei der strahlabwärts von der Phasenmaske Licht der nullten Beugungsordnung mit einem Raumfilter blockiert wird und sodann strahlabwärts von dem Raumfilter eine integrierte Intensität des Strahlengangs gemessen wird. Der Zusammenhang zwischen dem zweiten Grauwert und dem Phasenversatz kann dann durch Vergleich mit

$$I = \text{const}*(1-\cos\varphi)$$

gewonnen werden.

Bei einer entsprechenden Variante des erfindungsgemäßen Mikroskops ist strahlabwärts von der Phasenmaske eine Blende zum Blockieren von Licht der nullten Beugungsordnung vorhanden.

Ein ähnlich einfacher Zusammenhang besteht, wenn für die Kalibrierung nur Licht der nullten Beugungsordnung gemessen wird. Der Zusammenhang zwischen dem zweiten Grauwert und dem Phasenversatz kann dann durch Vergleich mit

$$I = \text{const}*(1 + \cos\varphi)$$

gewonnen werden.

Ein entsprechendes Ausführungsbeispiel eines erfindungsgemäßen Mikroskops ist dadurch gekennzeichnet, dass eine Blende zum Blockieren des Lichts aus Beugungsordnungen größer als 0 vorhanden ist.

Prinzipiell kann eine separate Kamera vorhanden sein, die nur für die Messungen zur Kalibrierung der Phasenmaske verwendet wird.

Ein besonderer Vorteil der Erfindung ist aber, dass zum Messen der Intensität diejenige Kamera verwendet werden kann, die auch für die eigentlichen Mikroskopiemessungen zum Einsatz kommt. Der apparative Aufwand für das Durchführen der Kalibriermessungen ist also denkbar gering.

Das erfindungsgemäße Mikroskop kann insbesondere zum Durchführen des erfindungsgemäßen Verfahrens eingerichtet sein.

Erfindungsgemäß wird mit der Phasenmaske eine strukturierte Beleuchtung in Form beispielsweise eines Intensitätsgitters bereitgestellt. Die Phasenmaske kann zweckmäßig in einer zu einer Probenebene optisch konjugierten Ebene angeordnet sein. Solch ein Aufbau kommt beispielsweise bei einem Weitfeldmikroskop in Betracht. Die gewonnenen Mikroskopiedaten können dann einer SIM oder Apotom-Verrechnung unterworfen werden. Auf dem SLM kann beispielsweise ein streifenförmiges Phasenmuster angezeigt werden, dass aus Linien besteht, die abwechselnd einen Grauwert von 0 und 128 aufweisen. Bei einem ideal kalibrierten SLM entspricht das einem Phasenhub von 0 beziehungsweise $\pi$. Durch Entfernen der Laserblockfilter kann der Rückreflex vermessen werden. Der Rückreflex kann dabei von einem separaten Spiegel (gehört nicht zur Erfindung) oder auch von einem Objektträger oder Deckglas kommen.

Bei anderen Anwendungen werden Phasenmasken zur Wellenfrontmanipulation verwendet. Beispielsweise können Aberrationen korrigiert werden. Für diese Zwecke ist die Phasenmaske bevorzugt in einer zu einer hinteren Objektivpupille optisch konjugierten Ebene angeordnet.

Weitere Vorteile und Merkmale der vorliegenden Erfindung werden im Folgenden mit Bezug auf die beigefügten Figuren erläutert. Darin zeigen:

Figur 1:     eine schematische Darstellung eines erfindungsgemäßen Mikroskops;

Figur 2:     eine beispielhafte Darstellung eines Strahlengangs in einem Strahlformungsmodul eines erfindungsgemäßen Mikroskops;

Figur 3:     eine erste schematische Darstellung einer beispielhaften Phasenmaske zur Erläuterung des erfindungsgemäßen Verfahrens;

Figur 4:     eine zweite schematische Darstellung der Phasenmaske aus Figur 3 zur Erläuterung des erfindungsgemäßen Verfahrens;

Figur 5:     ein erstes Diagramm zur Erläuterung des erfindungsgemäßen Verfahrens und

Figur 6:     ein zweites Diagramm zur Erläuterung des erfindungsgemäßen Verfahrens.

Ein Ausführungsbeispiel eines erfindungsgemäßen Mikroskops 100 und Varianten des erfindungsgemäßen Verfahrens werden mit Bezug auf die Figuren 1 bis 6 beschrieben. Gleiche und gleichwirkende Komponenten sind in den Figuren in der Regel mit denselben Bezugszeichen gekennzeichnet.

Figur 1 zeigt schematisch ein invertiertes Lichtblattmikroskop, welches als wesentliche Komponenten zunächst eine Lichtquelle 10, beispielsweise ein Lasermodul, zum Aussenden von Beleuchtungslicht 11, ein Mikroskopobjektiv 30 zum Leiten des Beleuchtungslichts 11 auf eine zu untersuchende Probe 48 und weitere optische Mittel 40, 50, 64 zum Leiten von Detektionslicht 54 von der Probe 48 auf eine Kamera 62, 66 aufweist. Um die für die Lichtblattmikroskopie geeignete Strahlform des Beleuchtungslichts 11 zu generieren, ist ein Strahlformungsmodul 20 vorhanden, welches unmittelbar strahlabwärts von der Lichtquelle 10 angeordnet ist.

Über einen Scanner 12 gelangt das Anregungslicht 11 sodann in das Mikroskopobjektiv 30 und von diesem über eine Meniskuslinse 40 auf die Probe 48. Die Probe 48 befindet sich in dem in Figur 1 dargestellten Beispiel in einem schalenförmigen Objektträger 44, die sowohl für das Anregungslicht 11 als auch für Detektionslicht 54, welches von der Probe 48 auf die Bestrahlung mit Anregungslicht 11 hin abgestrahlt wird, insbesondere Fluoreszenzlicht, transparent. Die Probe 48 kann von Wasser 46 umgeben sein. Der Objektträger 44 ist von einem Probentisch 42 gehalten, der insbesondere in bekannter Weise in allen drei Raumrichtungen x, y, z positioniert werden kann. Im gezeigten Beispiel wird das Lichtblatt mit einem Winkel von 45 Grad zu Normalrichtung des Objektträgers 44 auf diesen eingestrahlt.

Zum Positionieren des Mikroskopobjektivs 30 in einer Richtung längst zu dessen optischer Achse ist eine Piezomechanik 32 vorhanden.

Die Detektionsoptik beinhaltet als wesentliche Komponenten die Meniskuslinse 40 und ein Detektionsobjektiv 50. Zum Positionieren des Detektionsobjektivs 50 ist wiederum eine Piezomechanik 52 vorhanden. Nach Durchgang durch das Detektionsobjektiv 50 trifft das Detektionslicht 54 auf einen Strahlteiler 64 und gelangt sodann entweder auf eine erste Kamera 62 oder eine zweite Kamera 66. Der Strahlteiler 64 kann beispielsweise ein Farbteiler sein, sodass mit der ersten Kamera 62 und der zweiten Kamera 66 jeweils verschiedene Farbstoffe beobachtet werden können.

Der Aufbau der Strahlformungseinheit 20 mit weiteren Details ist in Figur 2 dargestellt. Das einkommende Licht 21, welches insbesondere ein gaussförmiges Strahlprofil aufweisen kann, gelangt zunächst auf eine erste Zylinderlinse 22, welche zusammen mit einer zweiten Zylinderlinse 23 ein erstes Teleskop bildet. In einem kollimierten Teil des Strahlengangs ist eine Phasenmaske 80, insbesondere ein nematischer SLM, angeordnet. Nach Reflexion an der Phasenmaske 80 gelangt das Licht über eine vierte Linse 24 und eine fünfte Linse 26, welche ein zweites Teleskop bilden, schließlich zur Austrittsebene 27. Zwischen der dritten Linse 24 und der vierten Linse 26 befindet sich eine Blende 25. Die Blende 25 kann insbesondere eine kreisscheibenförmige Blende sein, mit der nur die nullte Beugungsordnung im zentralen Bereich des Strahlprofils ausgeblendet wird. Bei einer alternativen Variante ist die Blende eine Lochblende, die gerade nur die nullte Beugungsordnung durchlässt. Die Phasenmaske ist in einer zur Austrittsebene 27 optisch konjugierten Ebene angeordnet. Für das in Figur 1 dargestellte Ausführungsbeispiel handelt es sich dabei bevorzugt um eine Zwischenbildebene. Das bedeutet, dass die Ebene 27 zur Probenebene des Mikroskopobjektivs 30 optisch konjugiert ist.

Grundsätzlich kann das Strahlformungsmodul 20 in einem Mikroskop aber auch so positioniert werden, dass die Ebene 27 und damit auch die Ebene, in der die Phasenmaske 80 angeordnet ist, in Pupillenebenen liegen, also in Ebenen, die zu einer hinteren Objektivpupille konjugiert sind.

Zur Ansteuerung des SLMs 80 ist bei dem Mikroskop 100 eine Steuer- und Auswerteeinheit 70, typischerweise ein PC, vorhanden. Mithilfe der Steuer- und Auswerteeinheit 70 kann die Phasenmaske 80 mit verschiedenen Mustern Gi(x,y), Gj(x,y) von Grauwerten G angesteuert werden.

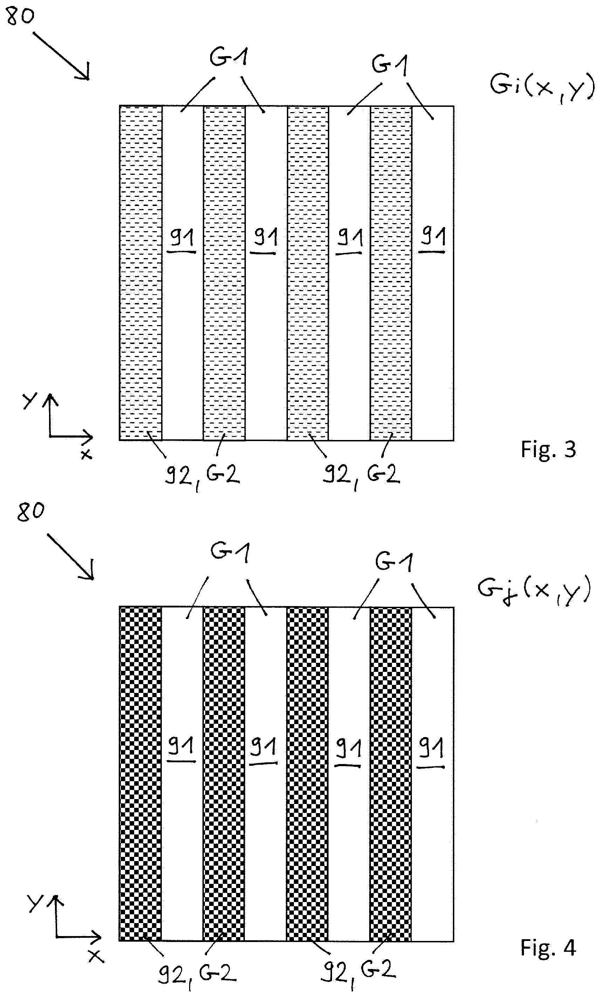

Bei dem erfindungsgemäßen Verfahren zum Kalibrieren der Phasenmaske 80 werden jetzt folgende Schritte durchgeführt: die Phasenmaske 80 wird zeitlich nacheinander mit unterschiedlichen Mustern Gi(x,y) von Grauwerten G angesteuert. Dabei bleibt ein erster Grauwert G1 einer ersten Teilmenge 91 von Segmenten konstant und ein zweiter Grauwert G2 einer zweiten Teilmenge 92 von Segmenten wird von einem Muster Gi(x,y) zum nächsten Muster Gj(x,y) variiert. Mit Bezug auf die schematischen Figuren 3 und 4 wird das näher erläutert. Die Figuren 3 und 4 zeigen jeweils ein und dieselbe Phasenmaske 80, die aber mit jeweils unterschiedlichen Mustern von Grauwerten angesteuert wird. In Figur 3 wird die Phasenmaske 80 mit dem Muster Gi(x,y) und in Figur 4 mit dem Muster Gj(x,y) angesteuert. Die Muster Gi(x,y) und Gj(x,y) weisen jeweils eine regelmäßige Streifenform auf, d. h. sie sind in der x-Richtung periodisch. Im Prinzip könnte solch ein Muster verwirklicht werden mit einer Phasenmaske, die streifenförmige Segmente aufweist. In der Regel werden aber 2D-Phasenmasken mit Pixeln in Zeilen und Spalten verwendet. Beispielsweise sind SLMs mit Auflösungen von bis zu 1280 x 1024 erhältlich.

Die Muster Gi(x,y) und Gj(x,y) zeichnen sich dadurch aus, dass der Grauwert einer ersten Teilmenge 91 von Segmenten sich nicht ändert. Das bedeutet, dass die Bereiche 91 in Figur 3 und Figur 4 jeweils denselben Grauwert G1 aufweisen. Der zweite Grauwert G2, mit dem die Segmente einer zweiten Teilmenge 92 angesteuert werden, unterscheidet sich hingegen beim Muster Gj(x,y) aus Figur 4 im Vergleich zum Muster Gi(x,y) aus Figur 3. Schematisch ist das durch eine unterschiedliche Schraffierung der Bereiche 92 in den Figuren 3 und 4 angedeutet.

Es muss aber nicht notwendig ein periodisches Muster an die Phasenmaske angelegt werden. Auch beliebige aperiodische Muster können verwendet werden, da auch in solchen Mustern höhere Raumfrequenzen enthalten sind und zu den gewünschten Beugungseffekten führen.

Eine Möglichkeit, dass erfindungsgemäße Verfahren mit dem in Figur 1 schematisch gezeigten Aufbau durchzuführen, besteht nun darin, den mithilfe der Phasenmaske 80 modulierten Lichtstrahl (im beschriebenen Beispiel handelt es sich um ein Lichtblatt) mit einem Umlenkspiegel 49, der an derselben Stelle wie die Probe 48 angeordnet wird, direkt in den Detektionsstrahlengang einzukoppeln und das Lichtblatt somit direkt auf eine der Kameras 62, 66 abzubilden.

Statt des Umlenkspiegel 49 kann auch eine spezielle fluoreszierende Probe 48 verwendet werden.

Eine noch einfachere Möglichkeit, die sogar vollständig ohne zusätzliche Komponenten im Mikroskop auskommt, besteht aber darin, einen Reflex am Objektträger 44 zu nutzen. Wegen der oben beschriebenen Geometrie wird das Licht des Lichtblatts an dem Objektträger 44 direkt in das Detektionsobjektiv 50 reflektiert.

Prinzipiell ist auch möglich, den Strahl vor dem Eintritt in die Probe 48 oder vor dem Auftreffen auf den Objektträger 44 aus dem Strahlengang auszukoppeln und ihn auf eine separate Kamera zu lenken. Solch eine separate Kamera könnte auch dauerhaft im Mikroskop verbaut sein, wobei die Auskopplung in Richtung dieser separaten Kamera mithilfe eines Strahlteilers erfolgen könnte.

Wenn, wie oben beschrieben, die nullte Beugungsordnung ausgeblendet wird, wenn also die Blende 55 eine kreisscheibenförmige Blende ist, interferieren auf der Kamera 62 oder 66 nur höhere Beugungsordnungen und ein periodisches Intensitätsgitter ist sichtbar. Dieses Intensitätsgitter auf der Kamera als solches spielt aber für die eigentliche Kalibrierung keine Rolle. Wesentlich ist, dass die Intensität I des gesamten, auf die Kamera fallenden Lichts gemessen wird. Es handelt sich dabei um die Gesamtintensität des Strahlengangs abzüglich des ausgeblendeten Lichts der ersten Beugungsordnung. Erfindungsgemäß werden nun diese Intensitäten für eine Vielzahl von unterschiedlichen Mustern $G_i(x,y)$ gemessen, wobei, wie beschrieben, der erste Grauwert G1 einer ersten Teilmenge 91 von Segmenten konstant bleibt und der zweite Grauwert G2 einer zweiten Teilmenge 92 von Segmenten verändert wird.

Besonders bevorzugt wird der zweite Grauwert G2 über den gesamten Dynamikbereich der Phasenmaske 80 variiert.

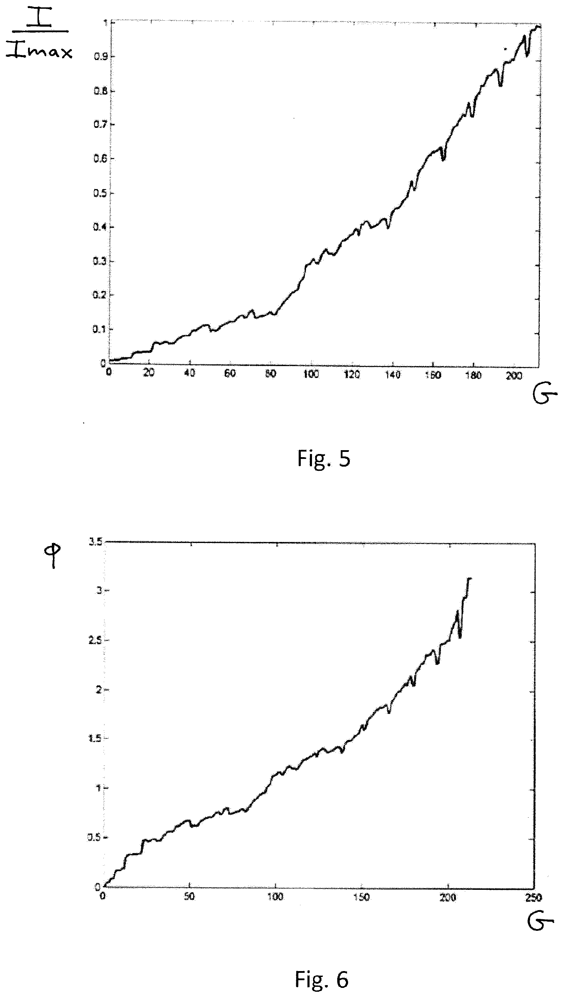

Aus den Messdaten wird eine Kennlinie I(G2) der gemessenen Intensität (I) in Abhängigkeit von dem zweiten Grauwert (G2) gewonnen. Figur 5 zeigt ein Beispiel einer solchen Kennlinie, bei der die auf den Maximalwert Imax normierte Intensität gegen den Grauwert G2 aufgetragen ist.

Für die Gesamtintensität des auf die Kamera 62 oder 66 auftreffenden Lichts gilt:

$$I = const(1-cos\varphi),$$

wobei $\varphi$ der durch die Phasenmaske 80 tatsächlich aufgeprägte Phasenversatz ist. Mit diesem Zusammenhang kann aus der in Abhängigkeit von G2 gemessenen Intensität der Phasenversatz $\varphi$ in Abhängigkeit des zweiten Grauwert G2 gewonnen werden. Die Abhängigkeit des Phasenversatzes $\varphi$ von dem eingestellten Grauwert G2 ist für die Messdaten der Figur 5 in dem Diagramm in Figur 6 gezeigt, wo der Phasenversatz $\varphi$ gegen den Grauwert G aufgetragen ist. Abbildung 6 kann als Ergebnis der Kalibrierung der Phasenmaske 80 betrachtet werden und stellt im Prinzip die gewünschte Information bereit, wie die Phasenmaske 80 angesteuert werden muss, damit ein bestimmter gewünschter Phasenhub $\varphi$ erreicht wird. Beispielsweise kann die Information der Figur 6 in einer Tabelle in der Steuer- und Auswerteeinheit 70 niedergelegt sein.

Zur Verwirklichung des erfindungsgemäßen Verfahrens ist es nicht notwendig, die nullte Beugungsordnung auszublenden. Wenn die Gesamtintensität des Strahls einschließlich der nullten Beugungsordnung gemessen wird, muss statt der gesamten, auf die Kamera fallenden Intensität die Modulationstiefe der Intensität, also die Differenz zwischen maximaler und minimaler Intensität im Kamerabild gemessen werden.

Sodann ist es auch möglich, zur Messung ausschließlich das Licht der nullten Beugungsordnung zu verwenden. Die gemessene Intensität I hängt dann mit dem Phasenversatz $\varphi$ wie folgt zusammen:

$$I = const\ (1+cos\varphi).$$

Schließlich muss die Phasenmaske 80 nicht notwendig in einer Zwischenbildebene stehen. Grundsätzlich kann die Phasenmaske 80 in einer beliebigen Ebene stehen. Wenn etwa die Phasenmaske 80 in einer Pupillenebene positioniert ist, ist auf der Kamera das Raumfrequenzspektrum des Musters der Grauwerte zu sehen. Die Intensitätsmessung erfolgt in diesem Fall zum Beispiel genau in dem Bildbereich der Kamera, der der ersten Beugungsordnung entspricht oder, wie oben beschrieben, der nullten Beugungsordnung.

Im Prinzip können die Messdaten aus Figur 6 noch weiter verrechnet werden, beispielsweise in sogenannte Gamma-Werte, und direkt in die SLM-Ansteuerung einprogrammiert werden. Diese weiteren Schritte betreffen aber nicht mehr das eigentliche Kalibrierverfahren, sondern die Umsetzung in einem speziellen Gerät.

In ähnlicher Weise wie im Zusammenhang mit Figur 1 für ein Lichtblattmikroskop beschrieben, kann das erfindungsgemäße Verfahren auch bei einem Laser-Scanning-Mikroskop angewendet werden, bei dem ein SLM zur Strahlformung verwendet wird. Auch hier kann der SLM prinzipiell in einer Zwischenbildebene positioniert sein. Üblicherweise ist der SLM bei einem Laser-Scanning Mikroskop aber zur Wellenfrontmodulation in einer Pupillenebene angeordnet. Wenn man die Filter im Detektionsstrahlengang, die im eigentlichen Messbetrieb dafür sorgen, dass keine Anregungsstrahlung auf die Kamera gelangt, entfernt, kann der Rückreflex vermessen werden. Der Rückreflex kann dabei von einem speziell eingebauten Spiegel oder, wie oben für das Lichtblattmikroskop beschrieben, auch von dem Objektträger kommen. Alternativ kann auch hier eine spezielle fluoreszierende Probe, beispielsweise eine dünne fluoreszierende Schicht, verwendet werden.

Als Muster für die Grauwerte, können bei einem Laser-Scanning-Mikroskop insbesondere Muster verwendet werden, mit denen Dammann-Gitter erzeugt werden. Durch Modulieren des Grauwerts und Messung der Intensitäten mindestens einer Beugungsordnung in Abhängigkeit von dem Grauwert kann der Phasenversatz in Abhängigkeit des Grauwert wie oben beschrieben aus dem Zusammenhang

$$I = \text{const} \ (1+\cos\varphi)$$

bestimmt werden.

Die Phasenmaske, insbesondere der SLM kann auch Teil eines Photomanipulators sein, der zum gezielten Anschalten und Ausschalten von Farbstoffen, beispielsweise in einem Zellkern, verwendet wird.

Zur Korrektur von Aberrationen kann die Phasenmaske, insbesondere der SLM, auch im Detektionsstrahlengang eingesetzt werden. Beispielsweise kann der SLM in einer von dem Beleuchtungsstrahlengang und dem Detektionsstrahlengang gemeinsam genutzten Pupille positioniert sein. Das erfindungsgemäße Verfahren zum Kalibrieren des SLM kann dann wie im Zusammenhang mit Figur 1 beschrieben durchgeführt werden. Wenn sich der SLM in einer Pupille befindet, die nur von dem Detektionsstrahlengang genutzt wird, kann, wie beim Laser-Scanning-Mikroskop, durch Entfernen von Laserblockfiltern ein Rückreflex, beispielsweise vom Objektträger, vermessen werden. Dabei kann sowohl beleuchtungs- als auch detektionsseitig auf den Objektträger fokussiert werden. In diesem Fall ist der SLM in der Pupille voll ausgeleuchtet. Wenn der SLM mit einem periodischen Muster angesteuert wird, ist auf der Kamera wiederum das Raumfrequenzspektrum dieses Musters zu sehen. Wie oben beschrieben, kann dann die Intensität der ersten Beugungsordnung vermessen und zum Kalibrieren des SLM verwendet werden.

Mit der vorliegenden Erfindung wird ein neuartiges Verfahren zum Kalibrieren von Phasenmasken, insbesondere in Mikroskopen, bereitgestellt. Der wesentliche Vorteil dieses Verfahrens ist, dass es prinzipiell auch an einer betriebsfähigen Apparatur, ohne dass der SLM ausgebaut werden muss, also in-situ durchgeführt werden kann. Aufwändige Justierarbeiten an der Optik sind deshalb nicht mehr notwendig.

Bezugszeichenliste

| | |
|---|---|
| 10 | Lichtquelle |
| 11 | Beleuchtungslicht / Anregungslicht |
| 12 | Scanner |
| 20 | Strahlformungseinheit |
| 21 | einlaufendes Strahlenbündel, insbesondere Gaußstrahl |
| 22 | erste Linse, beispielsweise Zylinderlinse |
| 23 | zweite Linse, beispielsweise Zylinderlinse |
| 24 | dritte Linse |
| 25 | Lochblende |
| 26 | vierte Linse |
| 27 | zur Ebene der Phasenmaske optisch konjugierten Ebene |
| 30 | Mikroskopobjektiv |
| 32 | Piezo-Mechanik |
| 40 | Meniskuslinse |
| 42 | Probentisch |
| 44 | Objektträger |
| 46 | Wasser |
| 48 | Probe, insbesondere fluoreszierende Probe |
| 49 | separate Strahlumlenkmittel |
| 50 | Detektionsobjektiv |
| 52 | Piezo-Mechanik |
| 54 | Detektionslicht |
| 62 | Kamera |
| 64 | Strahlteiler |
| 66 | Kamera |
| 64 | Strahlteiler |
| 70 | Steuer- und Auswerteeinheit |
| 80 | Phasenmaske |
| 91 | erste Teilmenge von Segmenten |
| 92 | zweite Teilmenge von Segmenten |
| 100 | Mikroskop |
| G | Grauwert |
| G1 | erster Grauwert |
| G2 | zweiter Grauwert |
| Gi(x,y), Gj(x,y) | verschiedene Muster von Grauwerten G |
| I | gemessener Teil der Intensität des Lichts im Strahlengang |
| I(G2) | Kennlinie der gemessenen Intensität in Abhängigkeit von dem zweiten Grauwert G2 |
| LSM | Laser-Scanning-Mikroskop |
| SLM | Spatial Light Modulator |
| φ(G) | Zusammenhang zwischen dem zweiten Grauwert G2 und einem Phasenversatz φ, der durch die Phasenmaske 80 aufgeprägt wird |

**Patentansprüche**

1. Verfahren zum Kalibrieren einer Phasenmaske, insbesondere eines Spatial Light Modulators (SLM), in einem Strahlengang eines Lichtblattmikroskops (100) zum Untersuchen einer Probe, wobei das Lichtblattmikroskop mindestens eine Lichtquelle (10) zum Aussenden von Beleuchtungslicht (11), mindestens ein Mikroskopobjektiv (30) zum Leiten des Beleuchtungslichts (11) auf die Probe (48), und optische Mittel (40, 50, 64) zum Leiten von Detektionslicht (54) von der Probe (48) auf eine Kamera (62, 66) aufweist, wobei die zu kalibrierende Phasenmaske (80) im Strahlengang zwischen der Lichtquelle (10) und dem mindestens einem Mikroskopobjektiv (30) des Lichtblattmikroskops angeordnet ist,
wobei bei dem Verfahren folgende Verfahrensschritte durchgeführt werden:

   die Phasenmaske (80) wird nacheinander mit unterschiedlichen Mustern (Gi(x,y)) von Grauwerten (G) angesteuert,
   wobei ein erster Grauwert (G1) einer ersten Teilmenge (91) von Segmenten konstant bleibt und wobei ein zweiter Grauwert (G2) einer zweiten Teilmenge (92) von Segmenten von einem Muster (Gi(x,y)) zum nächsten Muster (Gj(x,y)) variiert wird, mindestens ein Teil (I) der gesamten Intensität des Lichts im Strahlengang wird strahlabwärts von der Phasenmaske (80) für die unterschiedlichen Muster (Gi(x,y)) gemessen und es wird eine Kennlinie (I(G2)) der gemessenen Intensität (I) in Abhängigkeit von dem zweiten Grauwert (G2) gewonnen,
   aus der Kennlinie (I(G2)) wird ein Zusammenhang (φ(G)) zwischen dem zweiten Grauwert (G2) und einem Phasenversatz (φ), der durch die Phasenmaske (80) aufgeprägt wird, gewonnen und
   eine Ansteuerung der Phasenmaske (80) wird auf Grundlage des gewonnenen Zusammenhangs (φ(G)) zwischen Grauwert (G2) und Phasenversatz (φ) kalibriert,
   **dadurch gekennzeichnet,**
   **dass** die Phasenmaske (80) für die Kalibrierungsmessungen mit Licht der Lichtquelle (10) beaufschlagt wird,
   **dass** für die Messungen zur Kalibrierung an einem Objektträger (44) zum Halten einer Probe oder an einem Deckglas reflektiertes Licht verwendet wird, wobei der Detektionsstrahlengang entweder frei ist von Filtern zum Blockieren von Beleuchtungslicht oder Filter zum Blockieren von Beleuchtungslicht im Detektionsstrahlengang für die Messungen zur Kalibrierung aus dem Strahlengang entfernt werden und
   **dass** mit der Phasenmaske (80) eine strukturierte Beleuchtung in Form eines Intensitätsgitters bereitgestellt wird.

2. Verfahren nach Anspruch 1,
**dadurch gekennzeichnet,**
**dass** die Phasenmaske (80) eine 2D-Phasenmaske ist mit Pixelreihen und Pixelzeilen.

3. Verfahren nach Anspruch 1 oder 2,
**dadurch gekennzeichnet,**
**dass** die Phasenmaske (80) ein nematischer Spatial Light Modulator (SLM) ist.

4. Verfahren nach einem der Ansprüche 1 bis 3,
**dadurch gekennzeichnet,**
**dass** die Muster (Gi(x,y)) mindestens in einer Raumrichtung (x, y) periodisch sind.

5. Verfahren nach einem der Ansprüche 1 bis 4,
**dadurch gekennzeichnet,**
**dass** die Muster (Gi(x,y)) Muster zum Erzeugen eines Dammanngitters sind.

6. Verfahren nach einem der Ansprüche 1 bis 5,
**dadurch gekennzeichnet,**
**dass** der zweite Grauwert (G2) über einen gesamten Dynamikbereich der Phasenmaske (80) variiert wird.

7. Verfahren nach einem der Ansprüche 1 bis 6,
**dadurch gekennzeichnet, dass** das Beleuchtungslicht, dass für die Messungen zur Kalibrierung verwendet wird, über separate Strahlumlenkmittel (49) zu einer Kamera (62, 66), die für die Messungen zur Kalibrierung verwendet wird, geleitet wird.

8. Verfahren nach einem der Ansprüche 1 bis 7,
**dadurch gekennzeichnet,**

   das strahlabwärts von der Phasenmaske (80) Licht der nullten Beugungsordnung mit einem Raumfilter blockiert wird,
   dass strahlabwärts von dem Raumfilter eine integrierte Intensität (I) des Strahlengangs gemessen wird und
   dass der Zusammenhang (φ(G)) zwischen dem zweiten Grauwert (G2) und dem Phasenversatz (φ) durch Vergleich mit I = const*(1-cos φ) gewonnen wird.

9. Verfahren nach einem der Ansprüche 1 bis 8,
**dadurch gekennzeichnet,**

   **dass** für die Kalibrierung nur Licht der nullten Beugungsordnung gemessen wird und
   **dass** der Zusammenhang (φ(G)) zwischen dem zweiten Grauwert (G2) und dem Phasenversatz (φ) durch Vergleich mit I = const*(1 + cos φ) gewonnen wird.

10. Verfahren nach einem der Ansprüche 1 bis 9, **dadurch gekennzeichnet,** **dass** eine separate Kamera vorhanden ist, die nur für die Messungen zur Kalibrierung der Phasenmaske (80) verwendet wird.

11. Verfahren nach einem der Ansprüche 1 bis 9, **dadurch gekennzeichnet,** **dass** zum Messen der Intensität (I) diejenige Kamera (62, 66) verwendet wird, die auch für die eigentlichen Mikroskopiemessungen verwendet wird.

12. Lichtblattmikroskop zum Untersuchen einer Probe und operativ zum Durchführen des Verfahrens nach einem der Ansprüche 1 bis 11 eingerichtet,

mit mindestens der Lichtquelle (10) zum Aussenden von Beleuchtungslicht (11), mit mindestens dem Mikroskopobjektiv (30) zum Leiten des Beleuchtungslichts (11) auf die Probe (48) und mit optischen Mitteln (40, 50, 64) zum Leiten von Detektionslicht (54) von der Probe (48) auf eine Kamera (62, 66), mit einer im Strahlengang angeordneten Phasenmaske (80), mit der Kamera (62, 66) zum Messen von Licht in einem Detektionsstrahlengang, mit einem Objektträger (44) zum Halten der Probe oder mit einem Deckglas und mit einer Steuer- und Auswerteeinheit (70) zum Ansteuern der Phasenmaske (80) und der Kamera (62, 66) und zum Auswerten des von der Kamera (62, 66) gemessenen Lichts, wobei die Steuer- und Auswerteeinheit (70) dazu eingerichtet ist, die Phasenmaske (80) nacheinander mit unterschiedlichen Mustern (Gi(x,y)) von Grauwerten (G) anzusteuern, wobei ein erster Grauwert (G1) einer ersten Teilmenge (91) von Segmenten konstant bleibt und wobei ein zweiter Grauwert (G2) einer zweiten Teilmenge (92) von Segmenten von einem Muster (Gi(x,y)) zum nächsten Muster (Gj(x,y)) variiert wird, die Kamera (62, 66) zum Messen mindestens eines Teils (I) der gesamten Intensität des Lichts im Strahlengang strahlabwärts von der Phasenmaske (80) für die unterschiedlichen Muster (Gi(x,y)) anzusteuern, eine Kennlinie (I(G2)) der gemessenen Intensität (I) in Abhängigkeit von dem zweiten Grauwert (G2) zu bilden, aus der Kennlinie (I(G2)) einen Zusammenhang (φ(G)) zwischen dem zweiten Grauwert (G2) und einem Phasenversatz (φ), der durch die Phasenmaske (80) aufgeprägt ist, zu gewinnen und eine Ansteuerung der Phasenmaske (80) auf Grundlage des gewonnenen Zusammenhangs (φ(G)) zwischen Grauwert (G2) und Phasenversatz (φ) zu kalibrieren, **dadurch gekennzeichnet,** **dass** an dem Objektträger (44) oder an dem Deckglas reflektiertes Licht für die Messungen zur Kalibrierung verwendet wird, **dass** der Detektionsstrahlengang frei ist von Filtern zum Blockieren von Beleuchtungslicht oder dass für die Messungen zur Kalibrierung Filter zum Blockieren von Beleuchtungslicht aus dem Detektionsstrahlengang entfernt werden und **dass** die Phasenmaske (80) eine strukturierte Beleuchtung in Form eines Intensitätsgitters bereitstellt.

13. Lichtblattmikroskop nach Anspruch 12, **dadurch gekennzeichnet,** **dass** die Phasenmaske (80) in einer zu einer Probenebene optisch konjugierten Ebene angeordnet ist.

14. Lichtblattmikroskop nach Anspruch 12, **dadurch gekennzeichnet,** **dass** die Phasenmaske (80) in einer zu einer hinteren Objektivpupille optisch konjugierten Ebene angeordnet ist, die insbesondere von einem Anregungsstrahlengang und dem Detektionsstrahlengang gemeinsam genutzt wird.

15. Lichtblattmikroskop nach einem der Ansprüche 12 bis 14, **dadurch gekennzeichnet,** **dass** strahlabwärts von der Phasenmaske (80) eine Blende zum Blockieren von Licht der nullten Beugungsordnung vorhanden ist.

16. Lichtblattmikroskop nach einem der Ansprüche 12 bis 14, **dadurch gekennzeichnet,** **dass** eine Blende zum Blockieren des Lichts aus Beugungsordnungen größer als 0 vorhanden ist.

**Claims**

1. Method for calibrating a phase mask, in particular a spatial light modulator (SLM), in a beam path of a light-sheet microscope (100) for examining a sample, wherein the light-sheet microscope comprises at least one light source (10) for emitting illumination light (11), at least one microscope objective (30) for guiding the illumination light (11) onto the sample (48), and optical means (40, 50, 64) for guiding detection light (54) from the sample (48) onto a camera (62, 66), wherein the phase mask (80) to be calibrated is arranged in the beam path between the light source (10) and the at least one microscope objective (30) of the light-sheet microscope,

wherein in the method the following method steps are performed:

the phase mask (80) is actuated successively with different patterns (Gi(x,y)) of grey levels (G),

wherein a first grey level (G1) of a first partial quantity (91) of segments remains constant, and wherein a second grey level (G2) of a second partial quantity (92) of segments is varied from one pattern (Gi(x,y)) to the next pattern (Gj(x,y)),

at least one part (I) of the total intensity of the light in the beam path is measured downstream of the phase mask (80) for the different patterns (Gi(x,y)) and a characteristic (I(G2)) of the measured intensity (I) is obtained in dependence on the second grey level (G2),

a relationship (φ(G)) between the second grey level (G2) and a phase shift (φ), which is imprinted by the phase mask (80), is obtained from the characteristic (I(G2)), and

an actuation of the phase mask (80) is calibrated on the basis of the obtained relationship (φ(G)) between grey level (G2) and phase shift (φ), **characterized**

**in that** the phase mask (80) for the calibration measurements is exposed to light from the light source (10),

**in that** light reflected at an object carrier (44) for holding a sample or at a cover slip is used for the measurements for the calibration, wherein either the detection beam path is free of filters for blocking illumination light or filters for blocking illumination light in the detection beam path are removed from the beam path for the measurements for the calibration, and

**in that** a structured illumination in the form of an intensity grid is provided by the phase mask (80).

2. Method according to claim 1, **characterized**
   **in that** the phase mask (80) is a 2D phase mask with pixel rows and pixel lines.

3. Method according to claim 1 or 2, **characterized**
   **in that** the phase mask (80) is a nematic spatial light modulator (SLM).

4. Method according to any one of claims 1 to 3, **characterized**
   **in that** the patterns (Gi(x,y)) are periodic in at least one spatial direction (x, y).

5. Method according to any one of claims 1 to 4, **characterized**
   **in that** the patterns (Gi(x,y)) are patterns for producing a Dammann grating.

6. Method according to any one of claims 1 to 5, **characterized**
   **in that** the second grey level (G2) is varied over the entire dynamic range of the phase mask (80).

7. Method according to any one of claims 1 to 6, **characterized**
   **in that** the illumination light used for the measurements for the calibration is guided via separate beam deflection means (49) to a camera (62, 66) which is used for the measurements for the calibration.

8. Method according to any one of claims 1 to 7, **characterized**

   **in that** light of the zero order of diffraction is blocked using a spatial filter downstream of the phase mask (80),
   **in that** an integrated intensity (I) of the beam path is measured downstream of the spatial filter, and
   **in that** the relationship (φ(G)) between the second grey level (G2) and the phase shift (φ) is obtained by a comparison with $I = const*(1-\cos φ)$.

9. Method according to any one of claims 1 to 8, **characterized**

   **in that** only light of the zero order of diffraction is measured for the calibration, and
   **in that** the relationship (φ(G)) between the second grey level (G2) and the phase shift (φ) is obtained by a comparison with $I = const*(1+\cos φ)$.

10. Method according to any one of claims 1 to 9, **characterized**
    **in that** a separate camera is present, which is used only for the measurements for the calibration of the phase mask (80).

11. Method according to any one of claims 1 to 9, **characterized**
    **in that** the camera (62, 66) that is also used for the actual microscopy measurements is used for measuring the intensity (I).

12. Light-sheet microscope for examining a sample and operationally set up for carrying out the method according to any one of claims 1 to 11, comprising:

    at least the light source (10) for emitting illumination light (11),
at least the microscope objective (30) for guiding the illumination light (11) onto the sample (48), and
optical means (40, 50, 64) for guiding detection light (54) from the sample (48) onto a camera (62, 66),
a phase mask (80) arranged in the beam path,
the camera (62, 66) for measuring light in a detection beam path,
an object carrier (44) for holding the sample, or a cover glass, and
a control and evaluation unit (70) for actuating the phase mask (80) and the camera (62, 66) and for evaluating the light measured by the camera (62, 66),
wherein the control and evaluation unit (70) is set up for
actuating the phase mask (80) successively with different patterns (Gi(x,y)) of grey levels (G), wherein a first grey level (G1) of a first partial quantity (91) of segments remains constant, and wherein a second grey level (G2) of a second partial quantity (92) of segments is varied from one pattern (Gi(x,y)) to the next pattern (Gj(x,y)), actuating the camera (62, 66) for measuring at least one part (I) of the total intensity of the light in the beam path downstream of the phase mask (80) for the different patterns (Gi(x,y)),
forming a characteristic (I(G2)) of the measured intensity (I) in dependence on the second grey level (G2),
obtaining from the characteristic (I(G2)) a relationship ($\varphi$(G)) between the second grey level (G2) and a phase shift ($\varphi$), which is imprinted by the phase mask (80), and
calibrating an actuation of the phase mask (80) on the basis of the obtained relationship ($\varphi$(G)) between grey level (G2) and phase shift ($\varphi$),
**characterized**
**in that** light reflected at the object carrier (44) or at the cover slip is used for the measurements for the calibration,
**in that** the detection beam path is free of filters for blocking illumination light, or in that filters for blocking illumination light are removed from the detection beam path for the measurements for the calibration, and
**in that** the phase mask (80) provides a structured illumination in the form of an intensity grid.

13. Light-sheet microscope according to claim 12,
**characterized**
**in that** the phase mask (80) is arranged in a plane which is optically conjugate to a sample plane.

14. Light-sheet microscope according to claim 12,
**characterized**

**in that** the phase mask (80) is arranged in a plane which is optically conjugate to a rear objective pupil and which in particular is used by an excitation beam path and the detection beam path.

15. Light-sheet microscope according to any one of claims 12 to 14,
**characterized**
**in that** a stop for blocking light of the zero order of diffraction is present downstream of the phase mask (80).

16. Light-sheet microscope according to any one of claims 12 to 14,
**characterized**
**in that** a stop for blocking light of orders of diffraction greater than 0 is present.

**Revendications**

1. Procédé pour étalonner un masque de phase, en particulier d'un modulateur spatial de lumière (SLM), dans un trajet optique d'un microscope à feuille de lumière (100) pour analyser un échantillon, dans lequel le microscope à feuille de lumière présente au moins une source de lumière (10) pour émettre une lumière d'éclairage (11), au moins un objectif de microscope (30) pour guider la lumière d'éclairage (11) sur l'échantillon (48), et des moyens optiques (40, 50, 64) pour guider une lumière de détection (54) à partir de l'échantillon (48) sur une caméra (62, 66), dans lequel le masque de phase (80) à étalonner est disposé dans le trajet optique entre la source de lumière (10) et l'au moins un objectif de microscope (30) du microscope à feuille de lumière, dans lequel lors du procédé les étapes de procédé suivantes sont mises en œuvre :

le masque de phase (80) est commandé successivement avec différents motifs (Gi(x, y)) de valeurs de gris (G), dans lequel une première valeur de gris (G1) d'une première quantité partielle (91) de segments reste constante et dans lequel une deuxième valeur de gris (G2) d'une deuxième quantité partielle (92) de segments est amenée à varier d'un motif (Gi(x, y)) au motif (Gj(x, y)) suivant, au moins une partie (I) de l'intensité totale de la lumière dans le trajet optique est mesurée en aval du masque de phase (80) pour les différents motifs (Gi(x, y)) et une courbe caractéristique (I(G2)) de l'intensité (I) mesurée en fonction de la deuxième valeur de gris (G2) est obtenue, une corrélation ($\varphi$(G)) entre la deuxième valeur de gris (G2) et un décalage de phase ($\varphi$), qui est appliqué par le masque de phase (80), est obtenue à partir de la courbe caractéristique (I(G2)) et

une commande du masque de phase (80) est étalonnée sur la base de la corrélation (φ(G)) obtenue entre la valeur de gris (G2) et le décalage de phase (φ),

**caractérisé en ce**

**que** le masque de phase (80) pour les mesures d'étalonnage est sollicité avec la lumière de la source de lumière (10),

**que** la lumière réfléchie sur un porte-objet (44) pour retenir un échantillon ou sur une lamelle couvre-objet est utilisée pour les mesures d'étalonnage, dans lequel le trajet optique de détection soit est exempt de filtres pour bloquer la lumière d'éclairage soit des filtres pour bloquer la lumière d'éclairage dans le trajet optique de détection pour les mesures d'étalonnage sont retirés du trajet optique et

**qu'**un éclairage structuré sous forme d'un réseau d'intensité est fourni avec le masque de phase (80).

2. Procédé selon la revendication 1,
   **caractérisé en ce**
   **que** le masque de phase (80) est un masque de phase 2D avec des rangées de pixels et des lignes de pixels.

3. Procédé selon la revendication 1 ou 2,
   **caractérisé en ce**
   **que** le masque de phase (80) est un modulateur spatial de lumière (SLM) nématique.

4. Procédé selon l'une quelconque des revendications 1 à 3,
   **caractérisé en ce**
   **que** les motifs (Gi(x, y)) sont périodiques au moins dans une direction spatiale (x, y).

5. Procédé selon l'une quelconque des revendications 1 à **4,**
   **caractérisé en ce**
   **que** les motifs (Gi(x, y)) sont des motifs pour produire un réseau de Dammann.

6. Procédé selon l'une quelconque des revendications 1 à 5,
   **caractérisé en ce**
   **que** la deuxième valeur de gris (G2) est amenée à varier sur toute une zone dynamique du masque de phase (80).

7. Procédé selon l'une quelconque des revendications 1 à 6,
   **caractérisé en ce que** la lumière d'éclairage qui est utilisée pour les mesures d'étalonnage est guidée par l'intermédiaire de moyens de déviation de faisceau (49) séparés vers une caméra (62, 66), qui est utilisée pour les mesures d'étalonnage.

8. Procédé selon l'une quelconque des revendications 1 à 7,
   **caractérisé en ce**

   **que** la lumière en aval du masque de phase (80) d'ordre de diffraction zéro est bloquée avec un filtre spatial,
   **qu'**une intensité (I) intégrée du trajet optique est mesurée en aval du filtre spatial et
   **que** la corrélation (φ(G)) entre la deuxième valeur de gris (G2) et le décalage de phase (φ) est obtenue par comparaison avec I = const*(1-cos φ).

9. Procédé selon l'une quelconque des revendications 1 à 8,
   **caractérisé en ce**

   **que** pour l'étalonnage seule la lumière d'ordre de diffraction zéro est mesurée et
   **que** la corrélation (φ(G)) entre la deuxième valeur de gris (G2) et le décalage de phase (φ) est obtenue par comparaison avec I = const*(1 + cos (p).

10. Procédé selon l'une quelconque des revendications 1 à 9,
    **caractérisé en ce**
    **qu'**une caméra séparée est présente, qui est utilisée uniquement pour les mesures d'étalonnage du masque de phase (80).

11. Procédé selon l'une quelconque des revendications 1 à 9,
    **caractérisé en ce**
    **que** la caméra (62, 66) qui est également utilisée pour les mesures de microscopie proprement dites est utilisée pour mesurer l'intensité (I).

12. Microscope à feuille de lumière conçu pour analyser un échantillon et de manière opérationnelle pour mettre en œuvre le procédé selon l'une quelconque des revendications 1 à 11,

    avec au moins la source de lumière (10) pour émettre une lumière d'éclairage (11),
    avec au moins l'objectif de microscope (30) pour guider la lumière d'éclairage (11) sur l'échantillon (48) et
    avec des moyens optiques (40, 50, 64) pour guider une lumière de détection (54) à partir de l'échantillon (48) sur une caméra (62, 66),
    avec un masque de phase (80) disposé dans le trajet optique,
    avec la caméra (62, 66) pour mesurer la lumière dans un trajet optique de détection,

avec un porte-objet (44) pour retenir l'échantillon ou avec une lamelle couvre-objet et

avec une unité de commande et d'évaluation (70) pour commander le masque de phase (80) et la caméra (62, 66) et pour évaluer la lumière mesurée par la caméra (62, 66),

dans lequel l'unité de commande et d'évaluation (70) est conçue pour

commander le masque de phase (80) successivement avec différents motifs (Gi(x, y)) de valeurs de gris (G), dans lequel une première valeur de gris (G1) d'une première quantité partielle (91) de segments reste constante et dans lequel une deuxième valeur de gris (G2) d'une deuxième quantité partielle (92) de segments est amenée à varier d'un motif (Gi(x, y)) au motif (Gj(x, y)) suivant,

commander la caméra (62, 66) pour mesurer au moins une partie (I) de l'intensité totale de la lumière dans le trajet optique en aval du masque de phase (80) pour les différents motifs (Gi(x, y)),

former une courbe caractéristique (I(G2)) de l'intensité (I) mesurée en fonction de la deuxième valeur de gris (G2),

à partir de la courbe caractéristique (I(G2)) obtenir une corrélation ($\varphi$(G)) entre la deuxième valeur de gris (G2) et un décalage de phase ($\varphi$) qui est appliqué par le masque de phase (80), et étalonner une commande du masque de phase (80) sur la base de la corrélation ($\varphi$(G)) obtenue entre la valeur de gris (G2) et le décalage de phase ($\varphi$),

**caractérisé en ce**

**que** la lumière réfléchie sur le porte-objet (44) ou sur la lamelle couvre-objet est utilisée pour les mesures d'étalonnage,

**que** le trajet optique de détection est exempt de filtres pour bloquer la lumière d'éclairage ou que pour les mesures d'étalonnage des filtres pour bloquer la lumière d'éclairage sont retirés du trajet optique de détection et

**que** le masque de phase (80) fournit un éclairage structuré sous forme d'un réseau d'intensité.

13. Microscope à feuille de lumière selon la revendication 12,
**caractérisé en ce**
**que** le masque de phase (80) est disposé dans un plan conjugué optiquement par rapport à un plan d'échantillon.

14. Microscope à feuille de lumière selon la revendication 12,
**caractérisé en ce**
**que** le masque de phase (80) est disposé dans un plan conjugué optiquement par rapport à une pupille d'objectif arrière, qui est utilisée en particulier conjointement par un trajet optique d'excitation et le trajet optique de détection.

15. Microscope à feuille de lumière selon l'une quelconque des revendications 12 à 14,
**caractérisé en ce**
**qu'**un diaphragme pour bloquer la lumière d'ordre de diffraction zéro est présent en aval du masque de phase (80).

16. Microscope à feuille de lumière selon l'une quelconque des revendications 12 à 14,
**caractérisé en ce**
**qu'**un diaphragme pour bloquer la lumière d'ordres de diffraction supérieurs à 0 est présent.

Fig. 1

Fig. 2

80

G-1    G-1                    $G_i(x,y)$

91      91      91      91

Y
↑
└→ X

$92, G-2$        $92, G-2$

Fig. 3

80

G-1    G-1                    $G_j(x,y)$

91      91      91      91

Y
↑
└→ X

$92, G-2$        $92, G-2$

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150323787 A1

**In der Beschreibung aufgeführte Nicht-Patentliteratur**

- **ZHENG ZHANG et al.** Simple method for measuring phase modulation in liquid crystal televisions. *OPTICAL ENGINEERING*, September 1994, vol. 33 (9), 3018